# EUROPÄISCHE PATENTSCHRIFT

(11) **EP 3 981 650 B1**
(45) Veröffentlichungstag und Bekanntmachung des Hinweises auf die Patenterteilung: **26.06.2024**
(21) Anmeldenummer: 21198371.3
(22) Anmeldetag: 22.09.2021
(51) Int. Cl.: B60R 9/055

(54) **TRANSPORTBOX FÜR EIN KRAFTFAHRZEUG**
TRANSPORT BOX FOR A MOTOR VEHICLE
BOÎTE DE TRANSPORT POUR UN VÉHICULE AUTOMOBILE

(30) Priorität: 06.10.2020 DE 102020212571
(43) Veröffentlichungstag der Anmeldung: 13.04.2022
(73) Patentinhaber: ATERA GmbH, 88299 Leutkirch im Allgäu (DE)
(72) Erfinder: Raida, Hans-Joachim, 42799 Leichlingen (DE)
(74) Vertreter: Patentanwälte Ruff, Wilhelm, Beier, Dauster & Partner mbB

(56) Entgegenhaltungen:
- EP-A2- 1 231 112
- DE-C1- 19 742 253
- DE-C5-102013 019 503
- DE-U1- 9 314 977

## Beschreibung

Die Erfindung betrifft eine Transportbox, insbesondere eine Dachbox, für ein Kraftfahrzeug, aufweisend eine Grundschale, die in einem betriebsfertig montierten Zustand fahrzeugfest angeordnet ist, eine Deckelschale, die um wenigstens eine Schwenkachse schwenkbeweglich an der Grundschale gelagert und relativ zu der Grundschale verlagerbar ist zwischen einer Schließstellung, in welcher die Deckelschale unter Einschluss eines Transportvolumens auf der Grundschale aufliegt, und einer Öffnungsstellung, in welcher die Deckelschale unter Öffnung des Transportvolumens um die Schwenkachse verlagert von der Grundschale angehoben ist, eine Arretiereinrichtung, mittels derer die Deckelschale in der Schließstellung an der Grundschale arretierbar ist, und aufweisend wenigstens eine Gelenkstütze, mittels derer die Deckelschale in der Öffnungsstellung an der Grundschale abgestützt ist, und die wenigstens einen ersten Gelenkhebel, der gelenkbeweglich an der Grundschale gelagert ist, und einen zweiten Gelenkhebel, der gelenkbeweglich an der Deckelschale gelagert ist, aufweist, wobei der erste Gelenkhebel und der zweite Gelenkhebel wenigstens mittelbar um eine Gelenkachse gelenkbeweglich miteinander verbunden sind und mittels einer Verlagerung der Deckelschale zwischen der Schließstellung und der Öffnungsstellung relativ zueinander um die Gelenkachse verlagerbar sind.

Eine derartige Transportbox ist in Form einer Dachbox für einen Personenkraftwagen allgemein bekannt und zum dachseitigen Transport von Ladegut vorgesehen. Die allgemein bekannte Dachbox weist eine Grundschale und eine Deckelschale auf. Die Grundschale ist im betriebsfertig montierten Zustand fahrzeugfest auf dem Fahrzeugdach des Personenkraftwagens montiert. Die Deckelschale ist um eine seitliche Schwenkachse schwenkbeweglich an der Grundschale gelagert und zwischen einer Schließ- und einer Öffnungsstellung verschwenkbar. In der Schließstellung liegt die Deckelschale auf der Grundschale auf und schließt auf diese Weise ein Transportvolumen zur Aufnahme des zu transportierenden Ladeguts ein. In der Öffnungsstellung ist die Deckelschale um die seitliche Schwenkachse nach oben verschwenkt und gibt hierdurch das Transportvolumen frei. Zur Arretierung der Deckelschale in der Schließstellung ist eine Arretiereinrichtung vorgesehen. Weiter weist die bekannte Dachbox eine Gelenkstütze auf, mittels derer die Deckelschale in der Öffnungsstellung gegen ein ungewolltes Herabschwenken an der Grundschale abgestützt ist. Die Gelenkstütze kann auch als Gelenkheber bezeichnet werden und mit einer Gasdruck- oder Federkraftunterstützung versehen sein. Die Gelenkstütze der bekannten Dachbox weist zwei Gelenkhebel auf, die um eine Gelenkachse gelenkbeweglich miteinander verbunden sind. An ihren der Gelenkachse abgewandten Enden sind die beiden Gelenkhebel gelenkbeweglich an der Grund- bzw. Deckelschale gelagert.

Das Dokument DE19742253C1 offenbart einen Transportbox nach dem Oberbegriff von Anspruch 1.

Aufgabe der Erfindung ist es, eine Transportbox der eingangs genannten Art bereitzustellen, die eine gegenüber dem Stand der Technik verbesserte Unfallsicherheit bietet und gleichzeitig einen möglichst einfachen Aufbau aufweist.

Diese Aufgabe wird dadurch gelöst, dass eine Sicherungseinrichtung mit wenigstens einem Sicherungselement an der wenigstens einen Gelenkstütze angeordnet ist, und dass das wenigstens eine Sicherungselement dazu vorgesehen ist, die Gelenkbeweglichkeit der Gelenkstütze um die Gelenkachse zu verriegeln. Durch die erfindungsgemäße Lösung wird in der Schließstellung eine zusätzlich zu der Arretiereinrichtung wirkende mechanische Sicherung zwischen der Grundschale und der Deckelschale erreicht. Diese mechanische Sicherung wird durch das Verriegeln der Gelenkbeweglichkeit der Gelenkstütze erreicht. Die auf diese Weise verriegelte Gelenkstütze wirkt einem ungewollten unfallbedingten Öffnen des Transportvolumens und einem Herausschleudern von Ladegut aus dem Transportvolumen entgegen. Infolge unfallbedingter Beschleunigungskräfte kann in dem Transportvolumen befindliches Ladegut von innen gegen die Grund- und/oder Deckelschale geschleudert werden und die Transportbox unkontrolliert von innen nach außen aufdrücken. Hierdurch kann das Ladegut auf die Fahrbahn des Kraftfahrzeugs geschleudert werden, was ein zusätzliches Unfall- und Verletzungsrisiko darstellt. Die erfindungsgemäße Lösung wirkt einem solchen unkontrollierten Aufdrücken durch und Herausschleudern von Ladegut entgegen und bietet daher eine verbesserte Unfallsicherheit. Dabei kommt der wenigstens einen Gelenkstütze erfindungsgemäß eine besonders vorteilhafte Mehrfachfunktion zu. Zum einen dient die Gelenkstütze der Abstützung der Deckelschale in der Öffnungsstellung. Mit anderen Worten ausgedrückt, verhindert die Gelenkstütze, dass die Deckelschale schwerkraftbedingt ungewollt aus der Öffnungsstellung in die Schließstellung zurückschwenkt. Zum anderen wirkt die in der Schließstellung verriegelte Gelenkbeweglichkeit der Gelenkstütze als zusätzliche starre Verbindung zwischen der Grund- und der Deckelschale. Hierdurch kann auf gesonderte Einrichtungen zur zusätzlichen Sicherung verzichtet und ein möglichst einfacher Aufbau der Transportbox beibehalten oder erreicht werden. Vorzugsweise sind die Arretiereinrichtung und die wenigstens eine Gelenkstütze an unterschiedlichen Längs- und/oder Stirnseiten der Transportbox angeordnet. Die Schwenkachse zur Verlagerung der Deckelschale zwischen der Schließ- und der Öffnungsstellung kann entlang, insbesondere parallel, zu einer seitlichen Längsseite und/oder front- oder heckseitigen Stirnseite der Transportbox orientiert sein. Im erstgenannten Fall ist die wenigstens eine Gelenkstütze vorzugsweise an der front- oder der heckseitigen Stirnseite angeordnet. Im zweitgenannten Fall ist die Gelenkstütze vorzugsweise an einer der seitlichen Längsseiten angeordnet. Die Gelenkstütze ist vorzugsweise in dem Transportvolumen angeordnet und somit wenigstens in der Schließstellung nicht von außen zugänglich. Die Sicherungseinrichtung dient der Verriegelung der Gelenkbeweglichkeit der Gelenkstütze und weist zu diesem Zweck das Sicherungselement auf. Vorzugsweise wirkt das Sicherungselement, insbesondere form- und/oder kraftschlüssig, unmittelbar zwischen den Gelenkhebeln und/oder unmittelbar zwischen zur gelenkbeweglichen Lagerung der Gelenkhebel vorgesehenen Lagerelementen der Deckel- und der Grundschale. Das Sicherungselement ist vorzugsweise ein Haken, eine Klinke, ein Riegel, ein Bolzen oder dergleichen. Vorzugsweise ist das Sicherungselement zwischen einer Sicherungsstellung, in welcher die Gelenkbeweglichkeit der Gelenkstütze blockiert ist, und einer Freigabestellung, in welcher die Gelenkbeweglichkeit freigegeben ist, verlagerbar. Vorzugsweise weist die Gelenkstütze genau zwei Gelenkhebel, nämlich den ersten Gelenkhebel und den zweiten Gelenkhebel, auf. Vorzugsweise ist die Gelenkbeweglichkeit der Gelenkstütze um die Gelenkachse - in der Schließstellung der Deckelschale - mittels des wenigstens einen Sicherungselements verriegelt.

Die erfindungsgemäße Lösung eignet sich in besonders vorteilhafter Weise für eine Transportbox in Form einer Dachbox, die zur Montage im Bereich eines Fahrzeugdachs vorgesehen ist. Die erfindungsgemäße Lösung kann aber auch für eine Transportbox in Form einer Heckbox, die zur Montage im Bereich eines Fahrzeughecks vorgesehen ist, verwendet werden.

In Ausgestaltung der Erfindung bildet das Sicherungselement - in der Schließstellung der Deckelschale - eine starre Verbindung zwischen dem ersten Gelenkhebel und dem zweiten Gelenkhebel aus. Diese starre Verbindung bewirkt die besagte Verriegelung der Gelenkbeweglichkeit der Gelenkhebel und somit mittelbar eine Verriegelung der Schwenkbeweglichkeit der Deckelschale um die Schwenkachse in Richtung der Öffnungsstellung. Das Sicherungselement ist einends mit dem ersten Gelenkhebel und andernends mit dem zweiten Gelenkhebel mechanisch wirkverbunden. Hierdurch kann auf eine unmittelbare mechanische Wirkverbindung des Sicherungselements mit der Deckel- und der Grundschale verzichtet werden. Dies vereinfacht den Aufbau und die Montage der Transportbox, da das Sicherungselement gemeinsam mit der Gelenkstütze an der Grund- und der Deckelschale montiert werden kann. Hierdurch kann auf einen gesonderten Montageschritt des Sicherungselements verzichtet werden.

In Ausgestaltung der Erfindung weist die Grundschale ein erstes Lagerelement auf, an welchem der erste Gelenkhebel gelenkbeweglich gelagert ist, und die Deckelschale weist ein zweites Lagerelement auf, an welchem der zweite Gelenkhebel gelenkbeweglich gelagert ist, und das Sicherungselement bildet - in der Schließstellung der Deckelschale - eine starre Verbindung zwischen dem ersten Lagerelement und dem zweiten Lagerelement aus. Die starre Verbindung zwischen dem ersten Lagerelement und dem zweiten Lagerelement bewirkt eine - zusätzlich zu der Arretiereinrichtung wirkende - unmittelbare Verriegelung der Schwenkbeweglichkeit der Deckelschale um die Schwenkachse. Hierdurch ist die Gelenkbeweglichkeit der Gelenkstütze um die Gelenkachse mittelbar verriegelt. Dem ersten Lagerelement und dem zweiten Lagerelement kommt eine besonders vorteilhafte Mehrfachfunktion zu. Zum einen dienen die beiden Lagerelemente als gelenkbewegliche Befestigungspunkte für die beiden Gelenkhebel. Zum anderen fungieren die beiden Lagerelemente als Befestigungs- und/oder Verbindungselemente zum Ausbilden der starren Verbindung mit dem Sicherungselement. Zum Ausbilden der starren Verbindung greift das Sicherungselement einends an dem ersten Lagerelement und andernends an dem zweiten Lagerelement an. Das erste Lagerelement und das zweite Lagerelement sind insbesondere jeweils als Lagerbolzen, Lageröse, Gelenkkopf, insbesondere Kugelgelenkkopf, oder dergleichen ausgebildet. Bei der Ausgestaltung der Erfindung kann auf eine besonders beanspruchbare Gestaltung der Gelenkhebel verzichtet werden. Denn die starre Verbindung zwischen dem ersten Lagerelement und dem zweiten Lagerelement bewirkt, dass jedenfalls zum Zwecke der Sicherung kein Kraftfluss über die beiden Gelenkhebel erfolgt.

In weiterer Ausgestaltung der Erfindung ist die Arretiereinrichtung an einer Längsseite der Transportbox angeordnet, und die wenigstens eine Gelenkstütze ist, insbesondere mittig in Bezug auf eine Breitenrichtung der Transportbox, an einer front- oder heckseitigen Stirnseite der Transportbox angeordnet. Diese Ausgestaltung der Erfindung bietet insbesondere bei einem Front- oder Heckaufprall eine nochmals verbesserte Unfallsicherheit. Denn durch die Anordnung der Gelenkstütze an der vorder- oder rückseitigen Stirnseite der Transportbox kann verhindert werden, dass Ladegut bei einem solchen Aufprall an der entsprechenden Stirnseite von innen nach außen durch die Transportbox dringt und aus dieser herausgeschleudert wird. Vorzugsweise ist die wenigstens eine Schwenkachse an der Längsseite, insbesondere parallel zu dieser, angeordnet. Weiter ist die Gelenkachse der Gelenkstütze vorzugsweise senkrecht zu der Stirnseite und/oder Breitenrichtung orientiert.

In weiterer Ausgestaltung der Erfindung ist das Sicherungselement relativ zu dem ersten Gelenkhebel und relativ zu dem zweiten Gelenkhebel verlagerbar zwischen einer Sicherungsstellung, in welcher das Sicherungselement die Lagerelemente jeweils starr miteinander verbindet, und einer Freigabestellung, welche das Sicherungselement von wenigstens einem der Lagerelemente gelöst ist. In der Sicherungsstellung ist die Gelenkbeweglichkeit der Gelenkstütze um die Gelenkachse mittelbar oder unmittelbar verriegelt. In der Freigabestellung ist die Gelenkbeweglichkeit der Gelenkstütze freigegeben. Die Verlagerung des Sicherungselements zwischen der Sicherungs- und der Freigabestellung kann manuell oder mittels eines Antriebs angetrieben erfolgen. Bei einer manuellen Betätigung können eine unmittelbare Betätigung des Sicherungselements oder eine Fernbetätigung über ein an dem Sicherungselement angreifendes Bewegungsübertragungselement vorgesehen sein. Alternativ oder zusätzlich kann die Verlagerung des Sicherungselements von der Freigabe- in die Sicherungsstellung trägheitsgesteuert erfolgen. Zu diesem Zweck ist die Sicherungseinrichtung vorzugsweise derart gestaltet, dass das Sicherungselement in Abhängigkeit wirksamer Beschleunigungskräfte selbsttätig von der Freigabe- in die Sicherungsstellung verlagerbar ist. Hierzu kann die Sicherungseinrichtung insbesondere ein an dem Sicherungselement angreifendes Massenpendel oder dergleichen aufweisen. Eine solche Gestaltung bewirkt, dass das Sicherungselement bei hinreichend hohen Beschleunigungen - wie sie beispielsweise bei einem Unfall auftreten - selbsttägig in die Sicherungsstellung verlagert wird, so dass auf eine manuelle oder motorische Verlagerung verzichtet werden kann.

In weiterer Ausgestaltung der Erfindung weist die Sicherungseinrichtung ein an dem Sicherungselement angreifendes Federelement auf, mittels dessen das Sicherungselement in Richtung der Sicherungsstellung vorgespannt ist. Hierdurch wird einer ungewollten Verlagerung des Sicherungselements von der Sicherungs- in die Freigabestellung verhindert. Dies bietet eine nochmals verbesserte Unfallsicherheit. Vorzugsweise ist das Federelement als Blatt- oder Wendelfeder gestaltet.

In weiterer Ausgestaltung der Erfindung ist der Sicherungseinrichtung ein an dem Sicherungselement angreifendes Bewegungsübertragungselement zugeordnet, mittels dessen das Sicherungselement - in der Schließstellung der Deckelschale - von einer Verriegelungsstellung in eine Freigabestellung verlagerbar ist. Das Bewegungsübertragungselement ermöglicht eine fernbetätigte Verlagerung des Sicherungselements. Das Bewegungsübertragungselement ist vorzugsweise ein Bowdenzug, ein Seilzug, ein Kabelzug, ein Gewindesteigungskabel, eine Zug- und/oder Druckstange oder dergleichen. Das Bewegungsübertragungselement ist einends mechanisch mit dem Sicherungselement wirkverbunden. Andernends ist vorzugsweise eine Wirkverbindung mit einer Betätigungseinrichtung zum Aufbringen einer entsprechenden Verlagerungsbewegung vorgesehen.

In weiterer Ausgestaltung der Erfindung ist eine manuell betätigbare Betätigungseinrichtung vorgesehen, die mit der Arretiereinrichtung und mit dem Bewegungsübertragungselement wirkverbunden ist. Die Betätigungseinrichtung weist wenigstens ein außenseitig an der Transportbox angeordnetes, manuell handhabbares Bedienelement auf. Diese Ausgestaltung der Erfindung ermöglicht eine kombinierte und/oder gleichzeitige Betätigung der Arretier- und der Sicherungseinrichtung. Hierdurch können ein nochmals vereinfachter Aufbau und eine besonders komfortable Bedienung der Transportbox erreicht werden. Die Betätigungseinrichtung kann auch als Zentralschließsystem bezeichnet werden.

In weiterer Ausgestaltung der Erfindung ist das Sicherungselement in die Gelenkstütze integriert und gemeinsam mit derselben montierbar und demontierbar. Die Integration des Sicherungselements in die Gelenkstütze bietet neben der vereinfachten Montage und Demontage einen konstruktiv einfachen Aufbau, da auf zusätzliche Lager-, Verbindungs- oder Befestigungselemente zur Anbringung des Sicherungselements an der Grund- und/oder der Deckelschale verzichtet werden kann.

In weiterer Ausgestaltung der Erfindung ist das Sicherungselement ein Rasthaken, der um eine Drehachse drehbeweglich an dem ersten Gelenkhebel oder dem ersten Lagerelement befestigt ist, und der lösbar mit einem Rastabschnitt des zweiten Gelenkhebels oder einem Rastabschnitt des zweiten Lagerelements verrastbar ist. Es versteht sich, dass auch eine hierzu umgekehrte Gestaltung vorteilhaft ist. Dementsprechend kann der Rasthaken um eine Drehachse drehbeweglich an dem zweiten Gelenkhebel oder dem zweiten Lagerelement befestigt sein, und lösbar mit einem Rastabschnitt des ersten Gelenkhebels oder einem Rastabschnitt des ersten Lagerelements verrastbar sein. Die Gestaltung des Sicherungselements als drehbeweglich befestigter Rasthaken ist konstruktiv besonders einfach und robust. In der Sicherungsstellung ist der Rasthaken lösbar mit dem Rastabschnitt des Gelenkhebels oder mit dem Rastabschnitt des Lagerelements verrastet. In der Freigabestellung ist diese Verrastung mittels einer entsprechenden Drehbewegung des Rasthakens um die Drehachse gelöst.

In weiterer Ausgestaltung der Erfindung weist die Sicherungseinrichtung ein einends an dem Rasthaken angreifendes Steuerelement auf, das andernends an dem zweiten Gelenkhebel oder dem zweiten Lagerelement angreift, und mittels dessen der Rasthaken - in der Öffnungsstellung der Deckelschale - in die Freigabestellung gesteuert ist, wobei der Rasthaken in der Freigabestellung vollständig unterhalb einer Oberkante der Grundschale positioniert ist. Hierdurch wird vermieden, dass der Rasthaken in der Öffnungsstellung der Deckelschale über die Oberkante der Grundschale ragt und somit ein Beladen des Transportvolumens mit Ladegut erschwert. Zum Absenken des Rasthakens unter die Oberkante greift das Steuerelement einends an dem Rasthaken an und hält diesen in der Öffnungsstellung der Deckelschale in der Freigabestellung. Andernends greift das Steuerelement an dem zweiten Gelenkhebel oder dem zweiten Lagerelement an. Es versteht sich, dass auch hier eine umgekehrte Anordnung entsprechend der vorbeschriebenen Ausgestaltung vorgesehen sein kann. Das Steuerelement kann insbesondere ein Zugelement, insbesondere ein Seil oder ein Kabel, eine Stange oder dergleichen sein. Vereinfacht ausgedrückt, wird der Rasthaken bei einem Verschwenken der Deckelschale in die Öffnungsstellung über das Steuerelement gesteuert in die Freigabestellung verlagert und dort gehalten.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer schematischen Seitenansicht eine Ausführungsform einer erfindungsgemäßen Transportbox in Form einer Dachbox mit einer Grund- und einer Deckelschale, wobei die Deckelschale eine Schließstellung einnimmt,
- Fig. 2: eine schematische Heckansicht der geschlossenen Dachbox nach Fig. 1,
- Fig. 3, 4: die Dachbox nach den Fig. 1 und 2 in einer weiteren schematischen Seitenansicht (Fig. 3) und einer schematischen Heckansicht (Fig. 4), wobei die Deckelschale eine Öffnungsstellung einnimmt,
- Fig. 5: eine vergrößerte Detaildarstellung der geschlossenen Dachbox entlang einer Schnittlinie I-I nach Fig. 1 im Bereich einer Gelenkstütze, wobei die Gelenkstütze zusammengeklappt ist,
- Fig. 6: eine vergrößerte Detaildarstellung der geöffneten Dachbox entlang einer Schnittlinie II-II nach Fig. 3, wobei die Gelenkstütze aufgeklappt ist,
- Fig. 7: eine vergrößerte Detaildarstellung der Dachbox in geöffnetem Zustand und im Bereich der Gelenkstütze in einer im Vergleich zu den Fig. 5 und 6 um 90° gedrehten Zeichenebene und
- Fig. 8: eine Ausgestaltung der erfindungsgemäßen Transportbox in einer der Fig. 6 entsprechenden vergrößerten Detaildarstellung.

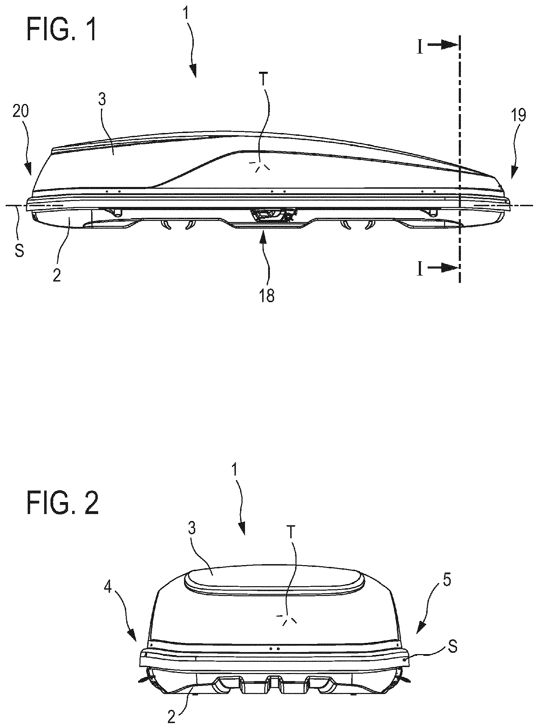

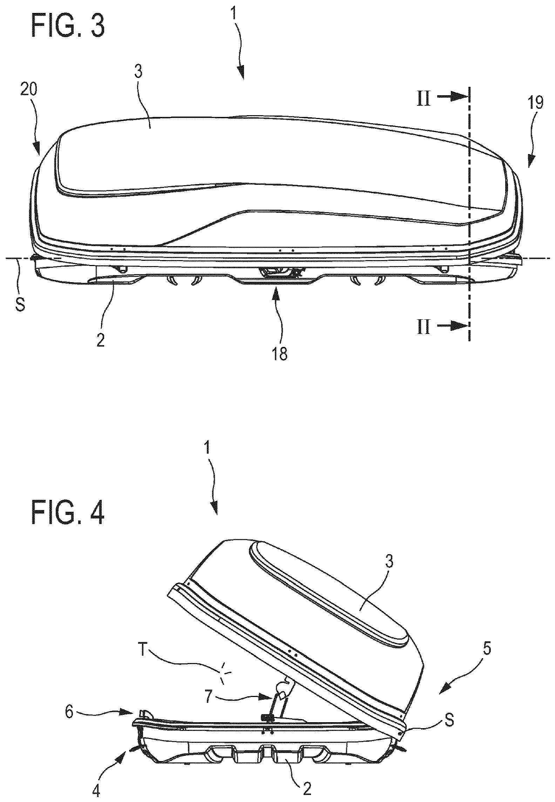

Gemäß den Fig. 1 bis 4 ist eine Transportbox in Form einer Dachbox 1 für ein zeichnerisch nicht näher dargestelltes Kraftfahrzeug in Form eines Personenkraftwagens vorgesehen. Die Dachbox 1 weist eine Grundschale 2 auf, die in einem betriebsfertig montierten Zustand auf eine dem Fachmann bekannte Weise an einem dachseitig montierten Lastenträger des Personenkraftwagens befestigt ist. Die Dachbox 1 weist zudem eine Deckelschale 3 auf, die relativ zu der Grundschale 2 zwischen einer Schließstellung (Fig. 1, 2) und einer Öffnungsstellung (Fig. 3, 4) verlagerbar ist. Zur Verlagerung zwischen der Schließ- und der Öffnungsstellung ist die Deckelschale 3 auf eine dem Fachmann bekannte Weise um eine Schwenkachse S schwenkbeweglich an der Grundschale 2 gelagert. In der Schließstellung liegt die Deckelschale 3 unter Einschluss eines Transportvolumens T auf der Grundschale 2 auf. Dementgegen ist die Deckelschale 3 in der Öffnungsstellung relativ zu der Grundschale 2 um die Schwenkachse S nach oben verschwenkt und somit wenigstens abschnittsweise von der Grundschale 2 angehoben. Dabei ist das Transportvolumen T in der Öffnungsstellung geöffnet. Die Öffnungsstellung dient einem Be- und Entladen der Dachbox 1, bei welchem ein zu transportierendes Ladegut in das Transportvolumen T eingebracht bzw. aus diesem entnommen werden kann.

Bei der gezeigten Ausführungsform ist die Dachbox 1 entlang ihrer - in Bezug auf die Zeichenebenen der Fig. 2 und 4 - linken Längsseite 4 öffenbar. Mit anderen Worten ausgedrückt, ist die Schwenkachse S entlang einer rechten Längsseite 5 der Dachbox 1 längserstreckt.

Bei einer zeichnerisch nicht dargestellten Ausführungsform ist die Deckelschale auf eine dem Fachmann bekannte Weise zu beiden Längsseiten und somit sowohl nach rechts als auch nach links hin öffenbar gestaltet, wobei in diesem Fall zwei entlang der Längsseiten erstreckte Schwenkachsen vorgesehen sind.

Weiter weist die Dachbox 1 eine Arretiereinrichtung 6 auf, mittels derer die Deckelschale 3 in der Schließstellung (Fig. 1, 2) an der Grundschale 2 arretierbar ist. Die Arretiereinrichtung 6 ist bei der gezeigten Ausführungsform an der linken Längsseite 4 angeordnet. Die Arretiereinrichtung 6 weist eine dem Fachmann grundsätzlich bekannte Gestaltung und Funktionsweise auf, so dass auf weitere diesbezügliche Erläuterungen verzichtet werden kann.

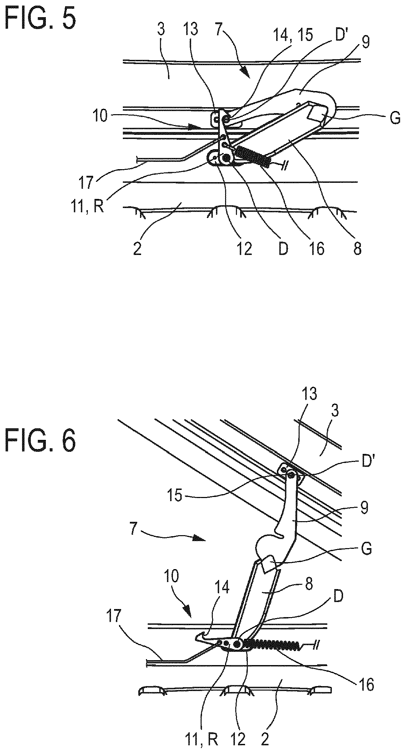

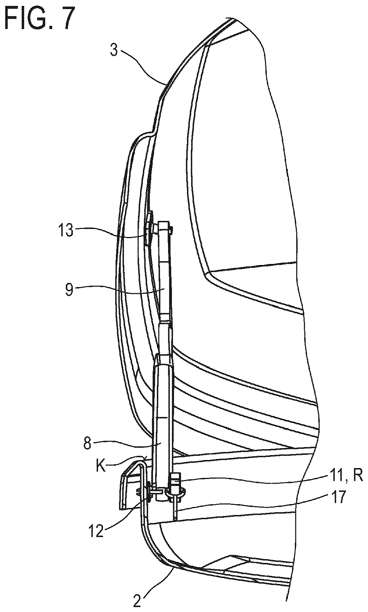

Die Dachbox 1 weist zudem eine Gelenkstütze 7 auf, mittels derer die Deckelschale 3 in der Öffnungsstellung (Fig. 3, 4) an der Grundschale 2 abgestützt ist. Hierdurch wirkt die Gelenkstütze 7 einem ungewollten schwerkraftbedingten Herabschwenken der Deckelschale 3 in die Schließstellung entgegen (Fig. 1, 2). Die Gelenkstütze 7 ist im Detail anhand der Fig. 5, 6 sowie 7 gezeigt und kann auch als Gelenkheber oder Scharniergelenk bezeichnet werden.

Die Gelenkstütze 7 weist einen ersten Gelenkhebel 8 und einen zweiten Gelenkhebel 9 auf. Der erste Gelenkhebel 8 ist gelenkbeweglich an der Grundschale 2 gelagert. Der zweite Gelenkhebel 9 ist gelenkbeweglich an der Deckelschale 3 gelagert. Weiterhin sind die beiden Gelenkhebel 8, 9 um eine Gelenkachse G (Fig. 5, 6) gelenkbeweglich miteinander verbunden und hierdurch mittels einer Verlagerung der Deckelschale 3 zwischen der Schließ- und der Öffnungsstellung relativ zueinander um die Gelenkachse G verlagerbar. In der Schließstellung sind der erste Gelenkhebel 8 und der zweite Gelenkhebel 9 um die Gelenkachse G aufeinanderzugeschwenkt. Mit anderen Worten ausgedrückt, ist die Gelenkstütze 7 in der Schließstellung zusammengeklappt. Die Gelenkhebel 8, 9 sind hierbei in etwa parallel nebeneinander angeordnet. In der Öffnungsstellung sind der erste Gelenkhebel 8 und der zweite Gelenkhebel 9 um die Gelenkachse G voneinander weg geschwenkt. Mit anderen Worten ausgedrückt, ist die Gelenkstütze 7 in der Öffnungsstellung aufgeklappt, wobei die beiden Gelenkhebel 8, 9 in ihrer jeweiligen Haupterstreckung zueinander fluchtend längserstreckt sind.

Die Dachbox 1 weist zudem eine an der Gelenkstütze 7 angeordnete Sicherungseinrichtung 10 mit einem Sicherungselement 11 auf. Die Sicherungseinrichtung 10 dient einer Verriegelung der Gelenkbeweglichkeit der Gelenkstütze 7 um die Gelenkachse G und damit einer zusätzlich zu der Arretiereinrichtung 6 wirkenden Arretierung der Schwenkbeweglichkeit der Deckelschale 3 um die Schwenkachse S. In der anhand Fig. 5 gezeigten Schließstellung ist die Gelenkbeweglichkeit der Gelenkstütze 7 mittels des Sicherungselements 11 lösbar verriegelt.

Bei der gezeigten Ausführungsform weist die Grundschale 2 ein erstes Lagerelement 12 auf, an welchem der erste Gelenkhebel 8 gelenkbeweglich gelagert ist. Die Deckelschale 3 weist ein zweites Lagerelement 13 auf. An diesem ist der zweite Gelenkhebel 9 gelenkbeweglich gelagert. Zum Verriegeln der Gelenkbeweglichkeit der Gelenkstütze 7 bildet das Sicherungselement 11 bei der gezeigten Ausführungsform eine starre Verbindung zwischen dem ersten Lagerelement 12 und dem zweiten Lagerelement 13 aus. Die Lagerelemente 12, 13 dienen somit zum einen der gelenkbeweglichen Lagerung der Gelenkhebel 8, 9 an der Grund- bzw. Deckelschale 2, 3. Zum anderen dienen die Lagerelemente 12, 13 zusätzlich als Verbindungs- und/oder Befestigungselemente für das Sicherungselement 11. Bei der gezeigten Ausführungsform wird die Gelenkbeweglichkeit der Gelenkstütze 7 somit mittelbar über die starre Verbindung zwischen den beiden Lagerelementen 12, 13 verriegelt.

Bei einer zeichnerisch nicht dargestellten Ausführungsform greift das Sicherungselement alternativ oder zusätzlich unmittelbar an den Gelenkhebeln und somit abseits der Lagerelemente an der Gelenkstütze an. Bei dieser Ausführungsform kann die Gelenkstütze entsprechende Befestigungs- und/oder Verbindungselemente für das Sicherungselement aufweisen.

Das Sicherungselement 11 ist anhand Fig. 5 in einer Sicherungsstellung gezeigt. Fig. 6 zeigt eine Freigabestellung. Dabei ist das Sicherungselement 11 relativ zu der Gelenkstütze 7, dem ersten Gelenkhebel 8, dem zweiten Gelenkhebel 9, der Grundschale 2 und/oder der Deckelschale 3 zwischen der Sicherungs- und der Freigabestellung verlagerbar. In der Sicherungsstellung bewirkt das Sicherungselement 11 die besagte starre Verbindung zwischen dem ersten Lagerelement 12 und dem zweiten Lagerelement 13. In der Freigabestellung ist starre Verbindung zwischen den Lagerelementen 12, 13 aufgehoben und die Gelenkstütze 7 in ihrer Gelenkbeweglichkeit um die Gelenkachse G freigegeben.

Bei der gezeigten Ausführungsform ist das Sicherungselement 11 ein Rasthaken R. Der Rasthaken R weist einends einen nicht näher bezeichneten Lagerabschnitt auf, der um eine Drehachse D drehbeweglich an dem ersten Lagerelement 12 befestigt ist. Andernends weist der Rasthaken R einen Rastabschnitt 14 auf, der in der Sicherungsstellung (Fig. 5) lösbar mit einem komplementären Rastabschnitt 15 des zweiten Lagerelements 13 verrastet ist. Der erste Gelenkhebel 8 ist um die Drehachse D gelenkbeweglich an der Grundschale 2 gelagert. Im Bereich des Rastabschnitts 15 des zweiten Lagerelements 13 ist eine weitere Gelenk- bzw. Drehachse D' vorgesehen. Um diese ist der zweite Gelenkhebel 9 gelenkbeweglich an der Deckelschale 3 gelagert.

In der Sicherungsstellung hintergreift der Rastabschnitt 14 die weitere Drehachse D' und ist auf diese Weise lösbar mit dem Rastabschnitt 15 des zweiten Lagerelements 13 verrastet. Ausgehend von der anhand Fig. 5 gezeigten verriegelten Konfiguration der Gelenkstütze 7 erfolgt ein Entriegeln der Gelenkbeweglichkeit mittels einer entgegen dem Uhrzeigersinn gerichteten Drehbewegung des Rasthakens R um die Drehachse D. Hierdurch wird die Rastverbindung zwischen den Rastabschnitten 14, 15 gelöst und die Gelenkbeweglichkeit der Gelenkstütze 7 um die Gelenkachse G - und damit auch um die Drehachsen D, D' - freigegeben. Nach Freigabe der Gelenkbeweglichkeit der Gelenkstütze 7 ist die Deckelschale 3 ausgehend von der Schließstellung in die Öffnungsstellung nach oben verschwenkbar.

Die Sicherungseinrichtung 10 weist zudem ein Federelement 16 und ein Bewegungsübertragungselement 17 auf. Bei einer zeichnerisch nicht dargestellten Ausführungsform ist lediglich eines der beiden besagten Elemente vorgesehen.

Das Federelement 16 dient einer Vorspannung des Sicherungselements 11 in die Sicherungsstellung (Fig. 5). Hierzu greift das Federelement 16 einends an einem nicht näher bezeichneten und in Bezug auf die Haupterstreckungsrichtung des Sicherungselements 11 zwischen dem Lagerabschnitt und dem Rastabschnitt 14 angeordneten Kraftangriffspunkt an dem Sicherungselement 11 an. Andernends ist das Federelement 16 auf eine zeichnerisch nicht näher dargestellte Weise an der Grundschale 2 angelenkt. Hierdurch bewirkt das Federelement 16 ein im Uhrzeigersinn um die Drehachse D gerichtetes Drehmoment auf das Sicherungselement 11. Das Federelement 16 ist bei der gezeigten Ausführungsform in Gestalt einer Wendelfeder ausgebildet.

Das Bewegungsübertragungselement 17 dient einer manuellen Fernentriegelung der Sicherungseinrichtung 10 und ist zu diesem Zweck einends kraft- und bewegungsübertragend mit dem Sicherungselement 11 wirkverbunden. Hierbei greift das Bewegungsübertragungselement 17 an einem nicht näher bezeichneten Kraftangriffspunkt an dem Sicherungselement 11 an, der ausgehend von dem Kraftangriffspunkt des Federelements 16 entlang der Haupterstreckungsrichtung des Sicherungselements 11 in Richtung des Rastabschnitts 14 verlagert ist. Andernends ist das Bewegungsübertragungselement 17 auf eine zeichnerisch nicht näher dargestellte, aber dem Fachmann grundsätzlich bekannte Weise mit einer manuell betätigbaren Betätigungseinrichtung 18 wirkverbunden (Fig. 1, 3). Die Betätigungseinrichtung 18 kann auch als Zentralschließsystem bezeichnet werden und ist bei der gezeigten Ausführungsform im Bereich der rechten Längsseite 5 der Dachbox 1 an der Grundschale 2 angeordnet und zusätzlich mit der Arretiereinrichtung 6 wirkverbunden. Die Betätigungseinrichtung 18 weist einen nicht im Detail ersichtlichen Hebel, Taster, Schalter oder dergleichen auf, der manuell betätigbar ist und eine Bewegungs- und Kraftübertragung auf das Bewegungsübertragungselement 17 gestattet.

Vorliegend ist das Bewegungsübertragungselement 17 ein Zugdraht, der ausgehend von einer nicht näher bezeichneten Haupterstreckungsrichtung im Bereich der Sicherungseinrichtung 10 abschnittsweise abgekröpft ist. Der Zugdraht greift zugkraft- und längsbewegungsübertragend an dem Sicherungselement 11 an.

Zum Lösen der Sicherung wird das Bewegungsübertragungselement 17 ausgehend von der Sicherungsstellung (Fig. 5) in Bezug auf die Zeichenebene der Fig. 5, 6 nach links bewegt. Dies bewirkt eine Drehung des Sicherungselements um die Drehachse D entgegen dem Uhrzeigersinn.

Wie insbesondere anhand Fig. 4 gezeigt ist, ist die Gelenkstütze 7 bei der gezeigten Ausführungsform an einer vorderseitigen Stirnseite 19 der Dachbox 1 angeordnet. Im betriebsfertig montierten Zustand ist die vorderseitige Stirnseite 19 in Fahrtrichtung des Personenkraftwagens nach vorne gerichtet. Zudem ist die Gelenkstütze 7 in Bezug auf eine Breitenrichtung der Dachbox 1 in etwa mittig angeordnet. Eine solche vorderseitige, insbesondere mittige, Anordnung der Gelenkstütze 7 ist besonders vorteilhaft. Denn bei einem Frontalaufprall des Personenkraftwagens wird in dem Transportvolumen T befindliches Ladegut nach vorne in Richtung der Stirnseite 19 geschleudert und trifft hierdurch - unter Umständen mit hoher Geschwindigkeit - von innen auf die Grundschale 2 und die Deckelschale 3. Durch einen solchen Aufprall des Ladeguts können die Grund- und die Deckelschale von aus dem Stand der Technik bekannten Dachboxen lokal auseinandergedrückt werden, wodurch das Ladegut unkontrolliert auf die Fahrbahn geschleudert werden kann. Die Anordnung der mit der Sicherungseinrichtung 10 versehenen Gelenkstütze 7 an der vorderen Stirnseite 19 wirkt dem auf einfache und besonders wirkungsvolle Weise entgegen.

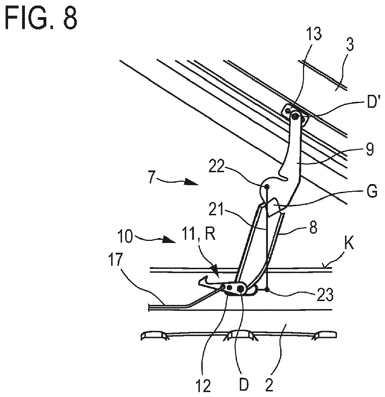

Fig. 8 zeigt eine um ein Steuerelement 21 ergänzte Variante der Sicherungseinrichtung 10, wobei das Federelement 16 allein aus Gründen der Übersichtlichkeit zeichnerisch ausgeblendet ist. Das Steuerelement 21 greift einends an dem zweiten Gelenkhebel 9 und andernends an dem Sicherungselement 11 an. Hierzu sind ein erster Befestigungspunkt 22 und ein zweiter Befestigungspunkt 23 vorgesehen. Die Befestigungspunkte 22, 23 sind derart auf die Hebelverhältnisse der Gelenkhebel 8, 9 und die drehbare Anlenkung des Sicherungselements 11 abgestimmt, dass das Sicherungselement 11 - nach einem Lösen der Rastverbindung - mittels einer Schwenkbewegung der Deckelschale 3 um die Schwenkachse S in Richtung der Öffnungsstellung in die Freigabestellung gesteuert und/oder in dieser gehalten ist. Das Steuerelement 21 ist jeweils gelenkig und zugkraftübertragend an den Befestigungspunkten 22, 23 angelenkt. Hierdurch wird das Sicherungselement 11 bei einem Aufklappen der Gelenkstütze 7 um die Gelenkachse G unter Einwirkung des Steuerelements 21 entgegen dem Uhrzeigersinn um die Drehachse D in Richtung der Freigabestellung gedreht. Zuvor erfolgt ein Lösen über das Steuerelements 21 der Rastverbindung zwischen den Rastabschnitten 14, 15 über eine Betätigung der Betätigungseinrichtung 18.

Der Rasthaken R ist in der anhand Fig. 8 gezeigten Konfiguration vollständig unterhalb einer Oberkante K der Grundschale 2 angeordnet und mittels des Steuerelements 21 in dieser Position gehalten. Dies erleichtert ein Be- und Entladen der Dachbox 1. Denn in der abgesenkten Position wird eine ungewollte Kollision mit dem Rasthaken R vermieden. Hierdurch kann gleichzeitig ein potenzielles Verletzungsrisiko verringert werden.

## Patentansprüche

1. Transportbox (1), insbesondere Dachbox, für ein Kraftfahrzeug, aufweisend
- eine Grundschale (2), die in einem betriebsfertig montierten Zustand fahrzeugfest angeordnet ist,
- eine Deckelschale (3), die um wenigstens eine Schwenkachse (S) schwenkbeweglich an der Grundschale (2) gelagert und relativ zu der Grundschale (2) verlagerbar ist zwischen einer Schließstellung, in welcher die Deckelschale (3) unter Einschluss eines Transportvolumens (T) auf der Grundschale (2) aufliegt, und einer Öffnungsstellung, in welcher die Deckelschale (3) unter Öffnung des Transportvolumens (T) um die Schwenkachse (S) verlagert von der Grundschale (2) angehoben ist,
- eine Arretiereinrichtung (6), mittels derer die Deckelschale (3) in der Schließstellung an der Grundschale (2) arretierbar ist,
- und aufweisend wenigstens eine Gelenkstütze (7), mittels derer die Deckelschale (3) in der Öffnungsstellung an der Grundschale (2) abgestützt ist, und die wenigstens einen ersten Gelenkhebel (8), der gelenkbeweglich an der Grundschale (2) gelagert ist, und einen zweiten Gelenkhebel (9), der gelenkbeweglich an der Deckelschale (3) gelagert ist, aufweist,
- wobei der erste Gelenkhebel (8) und der zweite Gelenkhebel (9) wenigstens mittelbar um eine Gelenkachse (G) gelenkbeweglich miteinander verbunden sind und mittels einer Verlagerung der Deckelschale (3) zwischen der Schließstellung und der Öffnungsstellung relativ zueinander um die Gelenkachse (G) verlagerbar sind,
- wobei eine Sicherungseinrichtung (10) mit einem Sicherungselement (11) an der wenigstens einen Gelenkstütze (7) angeordnet ist, und dass das wenigstens eine Sicherungselement (11) dazu vorgesehen ist, die Gelenkbeweglichkeit der Gelenkstütze (7) um die Gelenkachse (G) zu verriegeln,
- wobei die Grundschale (2) ein erstes Lagerelement (12), an welchem der erste Gelenkhebel (8) gelenkbeweglich gelagert ist, und ein zweites Lagerelement (13), an welchem der zweite Gelenkhebel (9) gelenkbeweglich gelagert ist, aufweist,
- **dadurch gekennzeichnet, dass** das Sicherungselement (11) - in der Schließstellung der Deckelschale (3) - einends an dem ersten Lagerelement (12) und andernends an dem zweiten Lagerelement (13) angreift und eine starre Verbindung zwischen dem ersten Lagerelement (12) und dem zweiten Lagerelement (13) ausbildet.

2. Transportbox (1) nach Anspruch 1, **dadurch gekennzeichnet, dass** das Sicherungselement (11) - in der Schließstellung der Deckelschale (3) - eine starre Verbindung zwischen dem ersten Gelenkhebel (8) und dem zweiten Gelenkhebel (9) ausbildet.

3. Transportbox (1) nach einem der vorhergehenden Ansprüche, **dadurch gekennzeichnet, dass** die Arretiereinrichtung (6) an einer Längsseite (4, 5) der Transportbox (1) angeordnet ist, und dass die wenigstens eine Gelenkstütze (7) mittig in Bezug auf eine Breitenrichtung der Transportbox (1), an einer front- oder heckseitigen Stirnseite (19, 20) der Transportbox angeordnet ist.

4. Transportbox (1) nach einem der vorhergehenden Ansprüche, **dadurch gekennzeichnet, dass** das Sicherungselement (11) relativ zu dem ersten Gelenkhebel (8) und relativ zu dem zweiten Gelenkhebel (9) verlagerbar ist zwischen einer Sicherungsstellung, in welcher das Sicherungselement (11) die Lagerelemente (12, 13) jeweils starr miteinander verbindet, und einer Freigabestellung, in welcher das Sicherungselement (11) von wenigstens einem der Lagerelemente (12, 13) gelöst ist.

5. Transportbox (1) nach Anspruch 4, **dadurch gekennzeichnet, dass** die Sicherungseinrichtung (10) ein an dem Sicherungselement (11) angreifendes Federelement (16) aufweist, mittels dessen das Sicherungselement (11) in Richtung der Sicherungsstellung vorgespannt ist.

6. Transportbox (1) nach Anspruch 4 oder 5, **dadurch gekennzeichnet, dass** der Sicherungseinrichtung (10) ein an dem Sicherungselement (11) angreifendes Bewegungsübertragungselement (17) zugeordnet ist, mittels dessen das Sicherungselement (11) - in der Schließstellung der Deckelschale (3) - von einer Verriegelungsstellung in eine Freigabestellung verlagerbar ist.

7. Transportbox (1) nach Anspruch 6, **dadurch gekennzeichnet, dass** eine manuell betätigbare Betätigungseinrichtung (18) vorgesehen ist, die mit der Arretiereinrichtung (6) und mit dem Bewegungsübertragungselement (17) wirkverbunden ist.

8. Transportbox (1) nach einem der vorhergehenden Ansprüche, **dadurch gekennzeichnet, dass** das Sicherungselement (11) in die Gelenkstütze (7) integriert und gemeinsam mit derselben montierbar und demontierbar ist.

9. Transportbox (1) nach einem der vorhergehenden Ansprüche, **dadurch gekennzeichnet, dass** das Sicherungselement (11) ein Rasthaken (R) ist, der um eine Drehachse (D) drehbeweglich an dem ersten Gelenkhebel (8) oder dem ersten Lagerelement (12) befestigt ist, und der lösbar mit einem Rastabschnitt des zweiten Gelenkhebels (9) oder einem Rastabschnitt (15) des zweiten Lagerelements (13) verrastbar ist.

10. Transportbox (1) nach Anspruch 9, **dadurch gekennzeichnet, dass** die Sicherungseinrichtung (10) ein einends an dem Rasthaken (R) angreifendes Steuerelement (21) aufweist, das andernends an dem zweiten Gelenkhebel (9) oder dem zweiten Lagerelement (13) angreift, und mittels dessen der Rasthaken (R) - in der Öffnungsstellung der Deckelschale (3) - in die Freigabestellung gesteuert ist, wobei der Rasthaken (R) in der Freigabestellung vollständig unterhalb einer Oberkante (K) der Grundschale (2) positioniert ist.

## Claims

1. Transport box (1), in particular roof box, for a motor vehicle, comprising
- a base shell (2), which is fixed to the vehicle in a ready-to-use mounted state,
- a cover shell (3), which is mounted on the base shell (2) so as to be pivotable about at least one pivot axis (S) and can be displaced relative to the base shell (2) between a closed position, in which the cover shell (3) rests on the base shell (2) while enclosing a transport volume (T), and an open position, in which the cover shell (3) is displaced about the pivot axis (S) and thereby lifted from the base shell (2) while opening the transport volume (T),
- a locking device (6) by means of which the cover shell (3) can be locked in the closed position on the base shell (2),
- and having at least one articulated support (7), by means of which the cover shell (3) is supported on the base shell (2) in the open position, and which has at least one first articulated lever (8), which is mounted on the base shell (2) such that it can move in an articulated manner, and a second articulated lever (9), which is mounted on the cover shell (3) such that it can move in an articulated manner,
- wherein the first articulated lever (8) and the second articulated lever (9) are connected to one another at least indirectly so as to be articulated about an articulation axis (G) and can be displaced relative to one another about the articulation axis (G) by means of a displacement of the cover shell (3) between the closed position and the open position,
- wherein a securing device (10) with a securing element (11) is arranged on the at least one articulated support (7), and in that the at least one securing element (11) is provided to prevent the articulation mobility of the articulated support (7) to lock the articulation axis (G),
- wherein the base shell (2) has a first bearing element (12), on which the first articulated lever (8) is articulated, and a second bearing element (13), on which the second articulated lever (9) is articulated,
- **characterized in that** the securing element (11) - in the closed position of the cover shell (3) - engages at one end on the first bearing element (12) and at the other end on the second bearing element (13) and forms a rigid connection between the first bearing element (12) and the second bearing element (13).

2. Transport box(1) according to claim 1, **characterized in in that** the securing element (11) - in the closed position of the cover shell (3) - forms a rigid connection between the first articulated lever (8) and the second articulated lever (9).

3. Transport box (1) according to one of the preceding claims, **characterized in that** the locking device (6) is arranged on a longitudinal side (4, 5) of the transport box (1), and **in that** the at least one articulated support (7) is arranged centrally with respect to a width direction of the transport box (1), on a front or rear end face (19, 20) of the transport box.

4. Transport box (1) according to one of the preceding claims, **characterized in that** the securing element (11) can be displaced relative to the first articulated lever (8) and relative to the second articulated lever (9) between a securing position, in which the securing element (11) rigidly connects the bearing elements (12, 13) to one another, and a release position, in which the securing element (11) is released from at least one of the bearing elements (12, 13) is released.

5. Transport box (1) according to claim 4, **characterized in that** the securing device (10) has a spring element (16) which engages on the securing element (11) and by means of which the securing element (11) is biased in the direction of the securing position.

6. Transport box (1) according to claim 4 or 5, **characterized in that** the securing device (10) is assigned a movement transmission element (17) which engages on the securing element (11) and by means of which the securing element (11) - in the closed position of the cover shell (3) - can be displaced from a locking position into a release position.

7. Transport box (1) according to claim 6, **characterized in that** a manually actuating device (18) is provided, which can be actuated with the locking device (6) and is operatively connected to the movement transmission element (17).

8. Transport box (1) according to one of the preceding claims, **characterized in that** the securing element (11) is integrated into the articulated support (7) and can be mounted and dismounted together with it.

9. Transport box (1) according to one of the preceding claims, **characterized in that** the securing element (11) is a latching hook (R) which is fastened to the first articulated lever (8) or the first bearing element (12) so as to be rotatable about an axis of rotation (D), and which can be latched releasably to a latching section of the second articulated lever (9) or a latching section (15) of the second bearing element (13).

10. Transport box (1) according to claim 9, **characterized in that** the securing device (10) has a control element (21) which engages at one end on the latching hook (R) and engages at the other end on the second articulated lever (9) or the second bearing element (13), and by means of which the latching hook (R) - in the opening position of the cover shell (3) - is controlled into the release position, the latching hook (R) being positioned completely below an upper edge (K) of the base shell (2) in the release position.

## Revendications

1. Boîte de transport (1), notamment coffre de toit, pour un véhicule automobile, présentant
- une coque de base (2) qui est disposée fixée au véhicule dans un état monté, prêt à l'emploi,
- un couvercle (3) qui est fixé à la coque de base (2) de manière à pivoter autour d'au moins un axe de pivotement (S) et déplaçable par rapport à la coque de base (2) entre une position de fermeture dans laquelle le couvercle (3) repose sur la coque de base (2) en emprisonnant un volume de transport (T), et une position d'ouverture dans laquelle le couvercle (3) lors de l'ouverture du volume de transport (T) est déplacé autour de l'axe de pivotement (S) et soulevé de la coque de base (2),
- un dispositif d'arrêt (6) au moyen duquel le couvercle (3), dans la position de fermeture, est verrouillable sur la coque de base (2),
- et présentant au moins un support de charnière (7) au moyen duquel le couvercle (3), dans la position d'ouverture, est appuyé contre la coque de base (2), et qui présente au moins un levier articulé (8) qui est fixé à la coque de base (2) de manière articulée, et un second levier articulé (9) qui est fixé au couvercle (3) de manière articulée,
- sachant que le premier levier articulé (8) et le second levier articulé (9) sont reliés ensemble de manière articulée au moins indirectement autour d'un axe d'articulation (G) et sont déplaçables l'un par rapport à l'autre autour de l'axe d'articulation (G) au moyen d'un déplacement du couvercle (3) entre la position de fermeture et la position d'ouverture,
- sachant qu'un dispositif de sûreté (10) avec un élément de sûreté (11) est disposé sur ledit au moins un support de charnière (7), et que ledit au moins un élément de sûreté (11) est prévu pour verrouiller la mobilité du support de charnière (7) autour de l'axe d'articulation (G),
- sachant que le coque de base (2) présente un premier élément d'appui (12) sur lequel est monté le premier levier articulé (8) de manière articulée, et un second élément d'appui (13) sur lequel le second levier articulé (9) est monté de manière articulée,
- **caractérisé en ce que** l'élément de sûreté (11) - dans la position de fermeture du couvercle (3) - s'engage d'un côté sur le premier élément d'appui (12) et, de l'autre côté, sur le second élément d'appui (13) et forme une liaison fixe entre le premier élément d'appui (12) et le second élément d'appui (13).

2. Boîte de transport (1) selon la revendication 1, **caractérisée en ce que** l'élément de sûreté (11) - dans la position de fermeture du couvercle (3) - forme une liaison fixe entre le premier levier articulé (8) et le second levier articulé (9).

3. Boîte de transport (1) selon une des revendications précédentes, **caractérisée en ce que** le dispositif d'arrêt (6) est disposé sur un côté longitudinal (4, 5) de la boîte de transport (1), et que ledit au moins un support de charnière (7) est disposé au milieu par rapport au sens de la largeur de la boîte de transport (1), sur un côté avant ou arrière (19, 20) de la boîte de transport.

4. Boîte de transport (1) selon une des revendications précédentes, **caractérisée en ce que** l'élément de sûreté (11) est déplaçable par rapport au premier levier articulé (8) et au second levier articulé (9), entre une position de sûreté dans laquelle l'élément de sûreté (11) relie respectivement entre eux les éléments d'appui (12, 13) de manière fixe, et une position de libération dans laquelle l'élément de sûreté (11) est détaché d'au moins un des éléments d'appui (12, 13).

5. Boîte de transport (1) selon la revendication 4, **caractérisée en ce que** le dispositif de sûreté (10) présente un élément à ressort (16) s'engageant sur l'élément de sûreté (11), au moyen duquel l'élément de sûreté (11) est précontraint en direction de la position de sûreté.

6. Boîte de transport (1) selon la revendication 4 ou 5, **caractérisée en ce que** le dispositif de sûreté (10) est associé à un élément de transmission de mouvement (17) s'engageant sur l'élément de sûreté (11), au moyen duquel l'élément de sûreté (11) - dans la position de fermeture du couvercle (3) - est déplaçable d'une position de verrouillage dans une position de libération.

7. Boîte de transport (1) selon la revendication 6, **caractérisée en ce qu'**est prévu un dispositif d'actionnement (18) actionnable manuellement qui est en liaison active avec le dispositif d'arrêt (6) et avec l'élément de transmission de mouvement (17).

8. Boîte de transport (1) selon l'une des revendications précédentes, **caractérisée en ce que** l'élément de sûreté (11) est intégré au support de charnière (7) et est montable et démontable conjointement avec celui-ci.

9. Boîte de transport (1) selon l'une des revendications précédentes, **caractérisée en ce que** l'élément de sûreté (11) est un crochet d'encliquetage (R) qui est fixé au premier levier articulé (8) ou au premier élément d'appui (12) de manière mobile en rotation autour d'un axe de rotation (D), et qui est encliquetable de manière détachable, à une section d'encliquetage du second levier articulé (9) ou une section d'encliquetage (15) du second élément d'appui (13).

10. Boîte de transport (1) selon la revendication 9, **caractérisée en ce que** le dispositif de sûreté (10) présente un élément de commande (21) s'engageant sur le crochet d'encliquetage (R) d'un côté, qui s'engage d'un autre côté sur le second levier articulé (9) ou le second élément d'appui (13), et au moyen duquel le crochet d'encliquetage (R) - dans la position d'ouverture du couvercle (3) - est commandé dans la position de libération, sachant que le crochet d'encliquetage (R) dans la position de libération est positionné complètement en-dessous du bord supérieur (K) de la coque de base (2).
